# EUROPEAN PATENT SPECIFICATION

(11) **EP 2 423 066 B1**
(45) Date of publication and mention of the grant of the patent: **15.05.2019**
(21) Application number: 11178433.6
(22) Date of filing: 23.08.2011
(51) Int. Cl.: B61C 3/00, B60L 9/00, B61C 7/04, B60L 9/28, B60L 11/08, B60L 11/12, B60L 15/20, B60L 15/42, B61L 15/00

(54) **Rail car with onboard electric components**
Schienenfahrzeug mit Bordelektrokomponenten
Véhicule ferroviaire avec composants électriques de bord

(30) Priority: 24.08.2010 JP 2010186962
(43) Date of publication of application: 29.02.2012
(73) Proprietor: Hitachi, Ltd., Chiyoda-ku Tokyo 100-8280 (JP)
(72) Inventor: Inarida, Satoru, Chiyoda-ku, Tokyo 100-8220 (JP); Iwasaki, Mitsuo, Chiyoda-ku, Tokyo 100-8220 (JP); Agatsuma, Koji, London, Greater London WC1H 0AF (GB)
(74) Representative: Mewburn Ellis LLP

(56) References cited:
- EP-A1- 1 065 128
- EP-A1- 1 186 497
- EP-A1- 1 493 643
- EP-A1- 1 555 185
- EP-A1- 2 213 545
- EP-A1- 2 444 272
- WO-A1-02/051662

## Description

### BACKGROUND OF THE INVENTION

### Field of the Invention

The present invention relates a train including a plurality of rail cars coupled together into a train, each of the plurality of rail cars comprising a DC power bus for DC power supply.

### Description of the Related Art

A railway includes two types of sections: sections with a facility configured to feed power to rail cars from the ground via a trolley wire or a third rail (these sections are hereinafter referred to as "electrified sections.") and sections which include no facility configured to feed power to the rail cars from the ground and in which the rail cars are powered by generation means provided in the rail cars (or powered by power sources) (these sections are hereinafter referred to as "unelectrified sections."). Sections with larger traffic volumes tend to be preferentially electrified. Furthermore, with a recent increase in energy unit price, many unelectrified sections have been scheduled for electrification.

For efficient operation of trains, the same trains need to run both through the electrified sections and through the unelectrified sections. As means for allowing the same trains to run both through the electrified sections and through the unelectrified sections, for example, a traction scheme based on a diesel railcar is widely used. In this scheme, a train of rail cars with no power source is towed by an electric railcar (or a diesel railcar) in the electrified sections and uses an internal combustion engine as a power source in the unelectrified sections.

Whether electric or diesel, an engine includes many apparatuses and is normally several times as heavy as a passenger railcar included in a train. For example, compared to power distributed trains such as bullet trains in which functions required for the train and including driving devices are arranged in a distributive manner, the engine may severely damage tracks by the heavy axle load thereof. In other cases, the engine disadvantageously limits an increase in the speed of trains partly because the car equipped with many heavy devices requires an enhanced braking force.

On the other hand, the function-distributed train needs to be optimized separately for the electrified sections and for the unelectrified sections. Disadvantageously, the same function-distributed train fails to work both in the electrified sections and in the unelectrified sections.

Furthermore, a train using an engine as the one and only power source is disadvantageously stalled if the engine fails. Moreover, recent cars include fixed window glass and thus require electricity for in-car ventilation and temperature management. Hence, if the engine, the one and only power source, fails, the in-car environment may be extremely deteriorated. In particular, with an electric railcar, if electric power transmission to the catenary is interrupted, all service for passengers is stopped even though the electric railcar itself has no problem.

The following document describes means for implementing a rail car configured to solve the above-described problems: Bombardier Transportation "EcoActive Technologies [MITRAC Hybrid] The Dual Power Propulsion Chain" [retrieved on 16 April 2010] Retrieved from Internet <URL:http//www.bombardier.com/files/en/supporting_docs/BT -EC04-MITRAC_Hybrid.pdf. The rail car in the document includes generation means based on a catenary voltage or a diesel engine and configured to switch between the catenary voltage and the diesel engine depending on the running section. The scheme described in the document allows the use of the plurality of power sources and thus enables continued operation and continued provision of passenger service even if any of the power sources has a problem.

However, the technique in the above-described document is assumed to be applied to engines or trains with fixed configurations. For engines, the technique disadvantageously fails to reduce track damage by distributing the train weight across the train. Furthermore, for trains with fixed configurations, the technique disadvantageously fails to change the train length depending on a transportation demand.

Moreover, if the technique is applied to a train running only through electrified sections, the train needs to be equipped with large generation means (a diesel engine) for the unelectrified sections. Furthermore, even a train running only through unelectrified sections need to be equipped with apparatuses required only in the presence of catenari.es. Thus, this train configuration is disadvantageously not efficient.

EP 1 555 185 A1 discloses an electrically driven rail vehicle with an emergency power generator and method of powering the vehicle. EP 1 186 497 A1 discloses a railway drive vehicle having an energy supply system comprising different or identical modules. WO 02/051662 A1 discloses an electric energy supply system for a train or several trains.

### SUMMARY OF THE INVENTION

According to the invention, there is provided a train including a plurality of rail cars coupled together into a train according to claim 1.

The present disclosure provides a train in which rail cars with onboard electric components for rail cars mounted thereon are included in a coupled manner, the train comprising a car with a generation device mounted thereon, a car configured to obtain power through a catenary to supply the power to the train, a car with a driving device mounted thereon, a car with an auxiliary power supply device mounted thereon to supply power to the onboard apparatuses, a car with a generation device mounted thereon to supply power to the train in an emergency, a car with power storage means mounted thereon, and a car with excessive power consumption means mounted thereon, all or a certain number of the cars being combined together into the train depending on an operation section or a passenger demand, wherein the train comprises at least one means (common bus line) for allowing power to be accommodated among the cars in the train and functions to enable coupling and uncoupling of the train into a plurality of (at least two) configurations regardless of types of the cars included in the trains.

Furthermore, the train is equipped with a train control system comprising terminal devices mounted on the respective cars and transmission paths each connecting the terminal devices together to generally control starting and stopping of each of the devices on the cars, a generating power, power received through a catenary (for regeneration, the amount of power regenerated for the catenary), power consumed by the driving device, and the like.

Moreover, the train control system comprises a function to automatically recognize a train configuration and types and numbers of the devices in the train and means for manually setting the train configuration and the types and numbers of the devices in the train so that the train configuration can be recognized using the function of the automatic recognition means or the manual setting means.

The present disclosure mounts the driving device, the power supply device, and the auxiliary power supply device on the different cars to distribute the functions across the train. This allows distribution of weights. The present disclosure further combines the car including the driving device with the power supply car used depending on operation. This allows optimization of a train running only through the unelectrified sections, a train running only through the electrified sections, and a train operating both through electrified sections and through the unelectrified sections.

In particular, when the car with the auxiliary generation device is coupled to a train using a catenary voltage as the only power source, the passenger service can be continuously provided even during catenary power interruption.

Furthermore, the use of the function to enable the coupling and uncoupling of the train into a plurality of configurations regardless of the types of the cars in the train enables the train length to be appropriately changed before and after the beginning of operation and during the operation. Thus, the range of the operation is expected to be further expanded.

Moreover, mounting of the train control system performing the above-described control and status display allows the power supply switching function to be automated and optimized. This enables a reduction in burdens on a driver and crew.

Additionally, when provided with a function to automatically recognize the configuration (or a function to allow the configuration to be centrally set), the train control system enables setting of the cars to be easily carried out when the configuration is changed and allows the configuration to be easily recognized when a coupling or uncoupling of the train is carried out. Thus, the need for a different train or a coupling or uncoupling during operation can be dealt with in a short time. Of course, the driver, any crew member, or a maintenance technician can set the configuration manually.

In addition, when the train control system is provided with a function to communicate with the ground so that the configuration can be set and checked from the ground, settings for the train can be further simplified.

### BRIEF DESCRIPTION OF THE DRAWINGS

Figure 1 is a diagram of a train;
Figure 2 is a diagram of a train;
Figure 3 is a diagram of a train;
Figure 4 is a diagram of a train;
Figure 5 is a diagram of a train;
Figure 6 is a diagram of a train;
Figure 7 is a diagram of a train;
Figure 8 is a diagram of a train;
Figure 9 is a diagram of a train;
Figure 10 is a diagram of a train;
Figure 11 is a diagram showing a rail car (equipped with a main generation device configured to allow the train to operate normally, for example, an internal combustion engine such as a diesel engine) included in a train according to an embodiment of the present invention;
Figure 12 is a diagram showing a rail car (equipped with an auxiliary generation device with a generation capacity allowing power to be supplied to onboard passenger service apparatuses if a main generation device and an apparatus for receiving power through a catenary fail to obtain sufficient power, for example, an internal combustion engine such as a diesel engine) included in a train according to an embodiment of the present invention;
Figure 13 is a diagram showing a rail car (equipped with a main generation device configured to allow the train to operate normally, for example, generation means such as fuel batteries) included in a train;
Figure 14 is a diagram showing a rail car (equipped with an auxiliary generation device with a generation capacity allowing power to be supplied to onboard passenger service apparatuses if a main generation device and an apparatus for receiving power through catenaries fail to obtain sufficient power, for example, generation means such as fuel batteries) included in a train;
Figure 15 is a diagram showing a rail car (configured to obtain power from an AC catenary via a pantograph mounted on the roof or fitted or equipped on another car to supply the power to the train) included in a train according to an embodiment of the present invention;
Figure 16 is a diagram showing a rail car (configured to obtain power from an AC catenary via a pantograph fitted or equipped on another car to supply the power to the train) included in a train;
Figure 17 is a diagram showing a rail car (configured to obtain power from a DC catenary or a third rail via a pantograph mounted on the roof or a shoe gear mounted on a truck to supply the power to the train) included in a train;
Figure 18 is a diagram showing a rail car (including no power converter but equipped with a pantograph on the roof to receive and feed catenary power to another car and a common bus line through which power is fed between adjacent cars) included in a train;
Figure 19 is a diagram showing a rail car (configured to obtain power from an AC catenary via a pantograph mounted on the roof or fitted or equipped on another car to supply the power to the train, and including a transformer and a power conversion device fitted or equipped under the floor) included in a train;
Figure 20 is a diagram showing a rail car (configured to obtain power from an AC catenary via a pantograph mounted on the roof or fitted or equipped on another car to supply the power to the train, and including an auxiliary generation device fitted or equipped under the floor) included in a train;
Figure 21 is a diagram showing a rail car (equipped with a driving device) included in the train according to an embodiment of the present invention;
Figure 22 is a diagram showing a rail car (equipped with an auxiliary power supply device configured to supply power to an onboard apparatus, and a driving device) included in a train;
Figure 23 is a diagram showing a rail car (equipped with an auxiliary power supply device configured to supply power to an onboard apparatus) included in a train;
Figure 24 is a diagram showing a rail car (equipped with a common bus line through which power is fed between adjacent cars) included in a train;
Figure 25 is a diagram showing a rail car (equipped with power storage means) included in a train;
Figure 26 is a diagram showing a rail car (equipped with means for consuming excessive power) included in a train;
Figure 27 is a diagram showing a rail car (including a transformer and a power converter (single-phase AC or DC conversion) fitted or equipped under the floor) included in a train;
Figure 28 is a diagram showing a rail car (including an auxiliary power supply device fitted or equipped under the floor) included in a train;
Figure 29 is a diagram showing a configuration example of a train control system;
Figure 30 is a diagram showing arrangement of a common bus line;
Figure 31 is a diagram showing arrangement of a common bus line;
Figure 32 is a diagram illustrating the relationship between onboard apparatuses;
Figure 33 is a diagram illustrating the relationship between onboard apparatuses;
Figure 34 is a diagram illustrating the relationship between onboard apparatuses; and
Figure 35 is a diagram illustrating the relationship between onboard apparatuses.

### DETAILED DESCRIPTION OF THE PREFERRED EMBODIMENTS

Embodiments of the present invention will be described below with reference to the drawings.

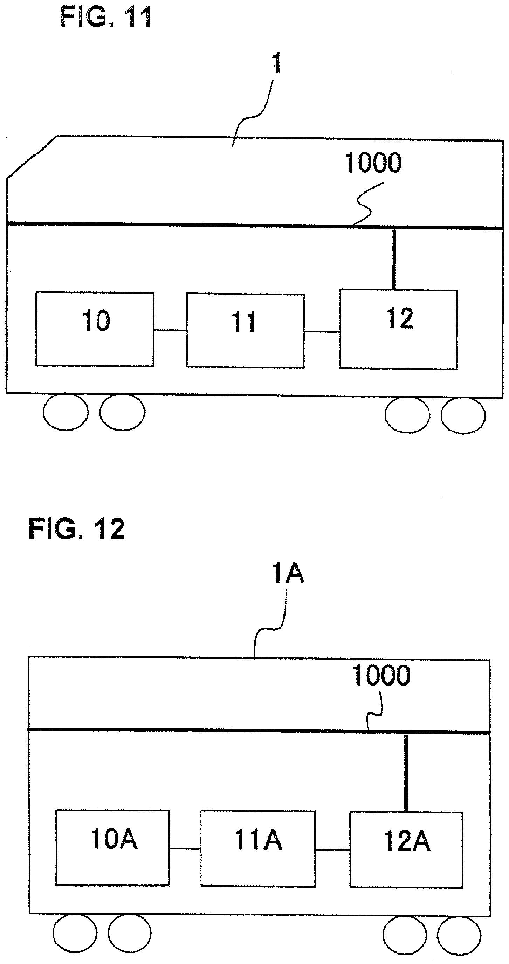

Examples of rail car functions forming the present invention will be described with reference to Figures 11 to 26. Figure 11 is a diagram of a configuration of a car 1 configured to generate power required to normally operate a train. The car 1 is equipped with an internal combustion engine (for example, a diesel engine) 10, a main generator 11 configured to covert the driving force of the internal combustion engine 10 into electricity, and a power converter 12 configured to covert an output voltage from the main generator 11 into a DC voltage and to supply power to a common bus line 1000. The apparatuses 10, 11, and 12 serve as a power source and a driving source for a train including a plurality of cars and are thus fitted or equipped in a car dedicated to power supply. Hence, the car is loaded with no passenger or baggage or includes only a small space for passengers and baggage.

Figure 12 is a diagram of a configuration of a car 1A with an auxiliary generation device including an internal combustion engine 10A, an auxiliary generator 11A, and a power converter 12A, and started if means for converting power from catenaries to supply the converted power to the common bus line 1000, for example, the car 1 and cars 2, 202, and 203 described below fail to supply sufficient power as a result of malfunctioning or a defect in a catenary system; the auxiliary generation device has a generation capacity allowing power to be supplied to passenger service apparatuses. The auxiliary generation device mounted in the car has a capacity of about several hundred kW, which is approximately one tenth the size of the capacity of a main generation device shown in Figure 11; the capacity of the main generation device is about several MWs. The auxiliary generation device is small and light and can be fitted or equipped under the floor, ensuring a sufficient space for passengers.

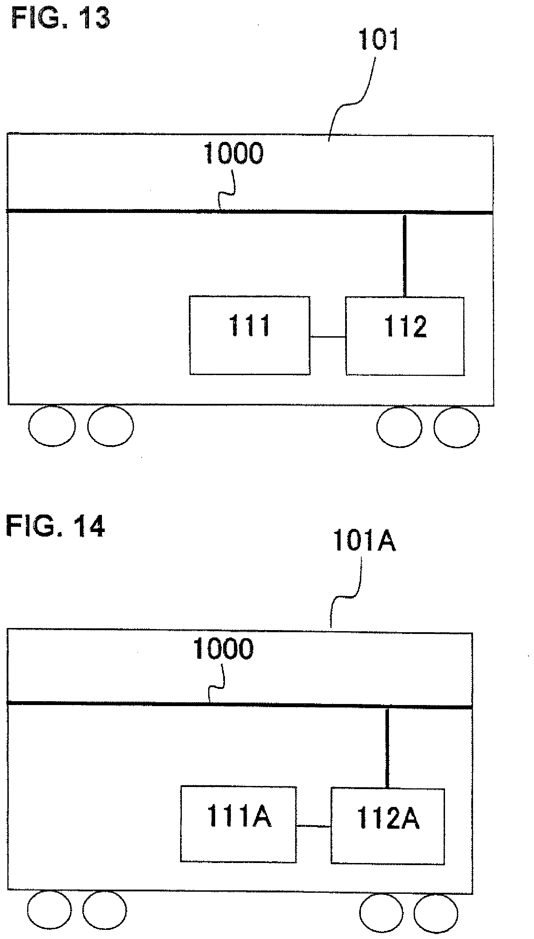

Figure 13 is a diagram of a configuration of a car 101 configured to generate power required to normally operate the train. The car 101 is equipped with a reusable generation device 111 such as a fuel generator, and a power converter 112 configured to convert power into a DC voltage to supply power to the common bus line 1000. The apparatuses 111 and 112 serve as a power source and a driving source for a train including a plurality of cars and are thus fitted or equipped in a car dedicated to power supply. Hence, the car is loaded with no passenger or baggage or includes only a small space for passengers and baggage.

Figure 14 is a diagram of a configuration of a car 101A with an auxiliary generation device started if means for converting power from catenaries to supply the converted power to the common bus line 1000, for example, the car 1 and the cars 2, 202, and 203 described below, fails to supply sufficient power as a result of malfunctioning or a defect in a catenary system; the auxiliary generation device is equipped with reusable generation means 111A such as a fuel generator, and a power converter 112A configured to convert power into a DC voltage to supply power to the common bus line 1000, and has a generation capacity allowing power to be supplied to passenger service apparatuses.

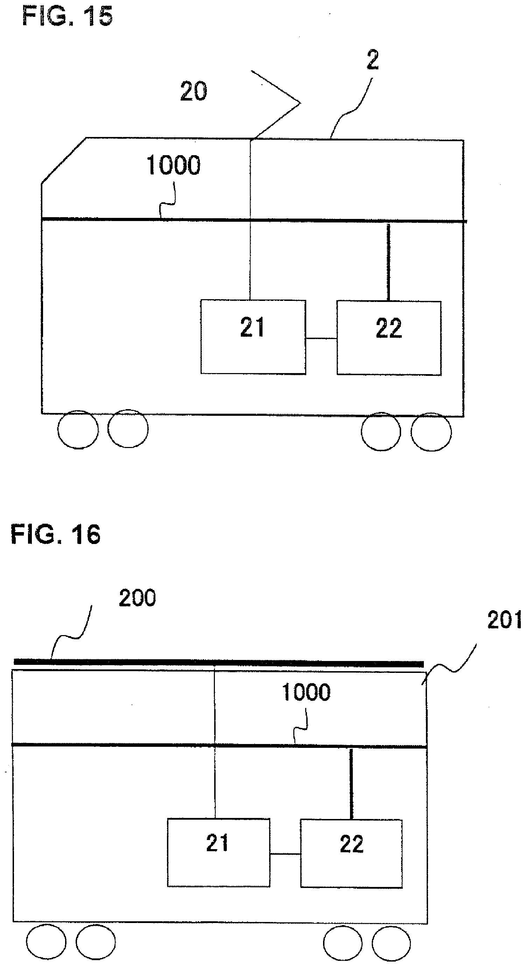

Figure 15 is a diagram showing the car 2 configured to receive power from a catenary (AC catenary; not shown) via a pantograph 20 to supply (or regenerate) the power to the common bus line 1000. The catenary power obtained via the pantograph 20 is reduced by a transformer 21. The reduced power is then converted into stable-DC-voltage power by a power conversion device 22. The resultant power is then supplied to the common bus line 1000. In the example shown in Figure 15, the pantograph 20 is of course fitted or equipped on the roof. The transformer 21 and the power conversion device 22 are mounted in the car.

Figure 16 is a diagram of a configuration of a car 201 with the same functions as those of the car 2 except for the absence of a pantograph. When the car is arranged in the middle of the train in a coupled manner, the capacity of power received from the catenary can be increased. If the car is included in the train in a coupled manner, an extra-high catenary 200 is required.

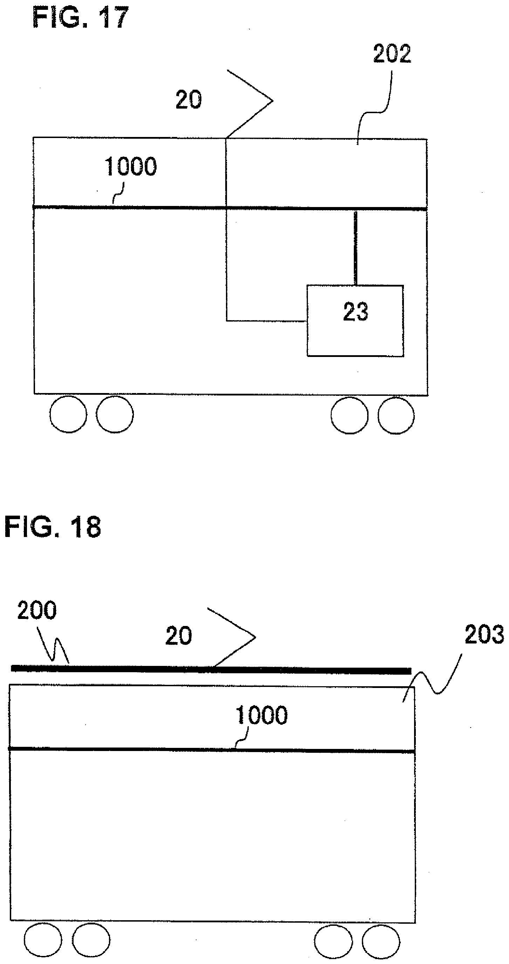

Figure 17 shows a car based on direct current and configured such that a power converter 23 converts power received through the pantograph 20 into a stable voltage and then supplies the stable voltage to the common bus line 1000. In the case of a third rail scheme, a shoe gear installed on a truck is used instead of the pantograph 20.

In Figure 18, the car 203 includes the pantograph 20 and functions to feed catenary power to the car 2 or 201 through the catenary 200.

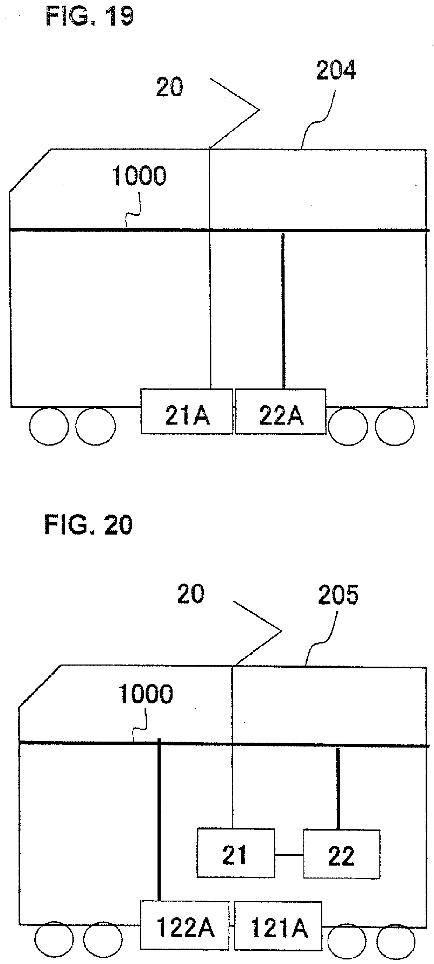

In Figure 19, a car 204 receives power from a catenary (AC catenary; not shown) via the pantograph 20 and to supply (or regenerate) the power to the common bus line 1000. The catenary power obtained via the pantograph 20 is reduced by a transformer 21A fitted or equipped under the floor. The reduced power is then converted into stable-DC-voltage power by a power conversion device 22A fitted or equipped under the floor. The resultant power is then supplied to the common bus line 1000. In Figure 19, the pantograph 20 is fitted or equipped on the roof, whereas the transformer 21A and the power conversion device 22A are fitted or equipped under the floor. This ensures a sufficient space for passengers.

In Figure 20, a car 205 receives power from a catenary (AC catenary; not shown) via the pantograph 20 to supply (or regenerate) the power to the common bus line 1000. The catenary power obtained via the pantograph 20 is reduced by the transformer 21. The reduced power is then converted into stable-DC-voltage power by the power conversion device 22. The resultant power is then supplied to the common bus line 1000. Furthermore, the car 205 in Figure 20 is equipped with an auxiliary generation device. An auxiliary generation device 121A and a power converter 122A are fitted or equipped under the floor of the car 205.

The mounted auxiliary generation device 121A has a capacity that is one-severalth or one-ten and severalth of the capacity of the generation device 111 shown in Figure 13. The auxiliary generation device 121A is small and light and can be fitted or equipped under the floor, ensuring a sufficient space for passengers.

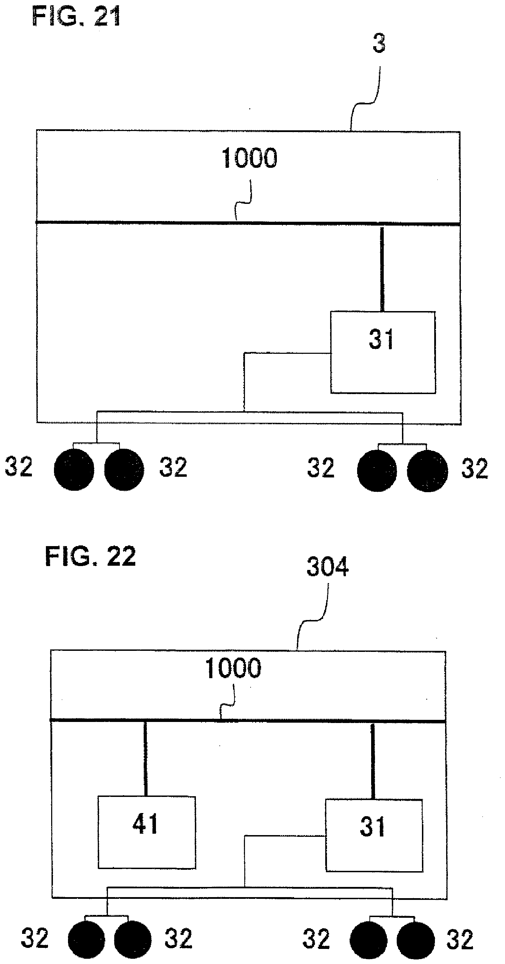

Figure 21 is a diagram showing a car 3 including a power conversion device 31 configured to obtain power from the common bus line 1000 to drive a motor 32 configured to drive wheels. In this example, one power conversion device drives four motors. However, the number of motors driven by the power conversion device may be one or two. In this case, the number of power conversion devices mounted on the car 3 may be one, two, (three), or four depending on the number of motors provided in one car and the number of motors driven by one power conversion device.

Figure 22 shows a car 304 corresponding to the car configured as shown in Figure 21 and additionally equipped with an auxiliary power supply device 41 configured to supply power to onboard load devices. Coupling this car to the train allows the train to be driven while enabling the onboard load devices to be supplied with power.

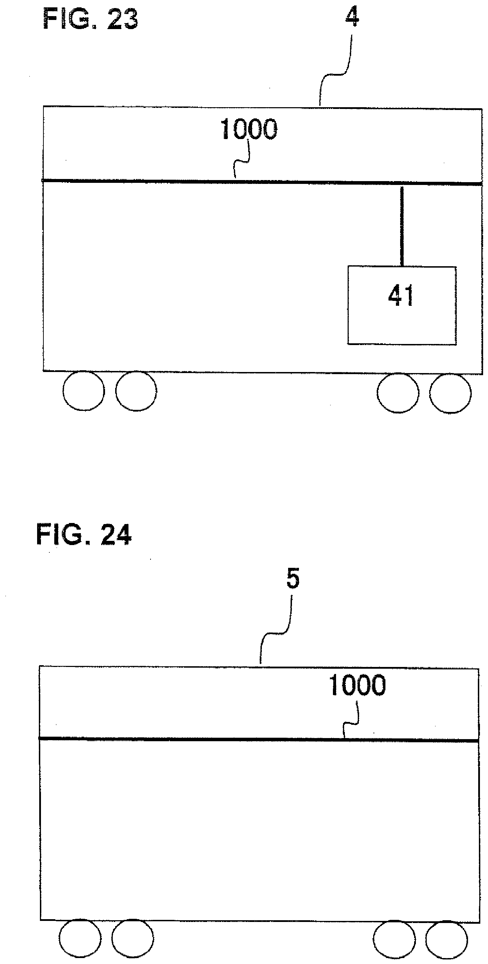

Figure 23 shows a car 4 equipped with the auxiliary power supply device 41 and connected to the common bus line 1000.

Figure 24 shows a car 5 equipped with the common bus line 1000 configured to allow power to be accommodated between adjacent cars. The car includes no power supply, no driving device, and no auxiliary power supply device, and does not include power storage means or power consumption means which will be described below. (Except for loads in the car such as air conditioning and lighting, the only apparatus related to power accommodation in the train is the common bus line 1000).

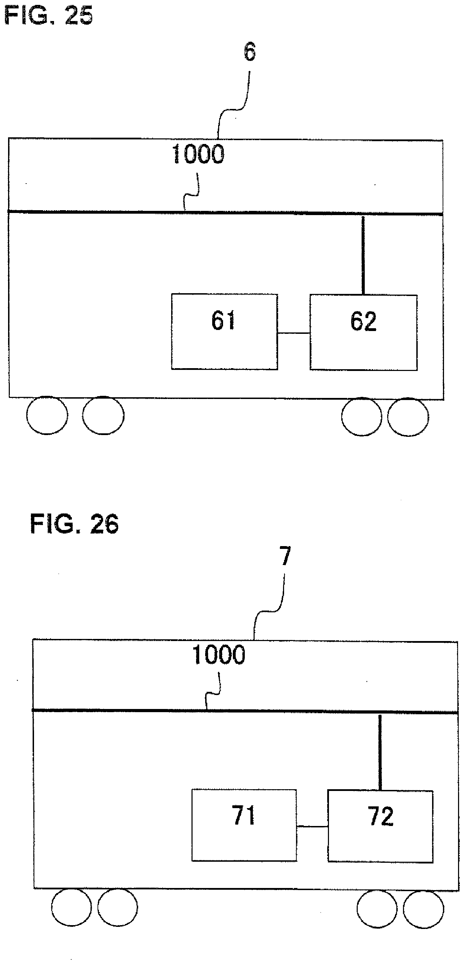

Figure 25 is a diagram showing a car 6 equipped with power storage means 61 and a power conversion device 62 configured to control the power between the power storage means 61 and the common bus line 1000. The car 6 stores energy (regeneration energy) generated during braking by the motor 32 mounted in the cars 3 and 304 and excess power in the train (the difference between power generated by the power supply device and power consumed by the driving device and the auxiliary power supply device) via the common bus line 1000 and the power conversion device 62 and supplies the energy to the common bus line 1000 during acceleration. Thus allows the energy efficiency in the train to be improved. Furthermore, the power conversion device 62 adjusts the amounts of power stored in and released from the power storage means 61 to stabilize the voltage of the common bus line.

Figure 26 is a diagram showing a car 7 equipped with power consumption means 71 (for example, a resistor) and a power conversion device 72 configured to control the power between the power consumption means 71 and the common bus line 1000. The car uses the energy (regeneration energy) generated during braking by the motor 32 mounted in the cars 3 and 304 and the excess power in the train (the difference between power generated by the power supply device and power consumed by the driving device and the auxiliary power supply device) to allow the power conversion device 72 to adjust the amount of power consumed by the power consumption means 71. Thus, the common bus line 1000 is stabilized.

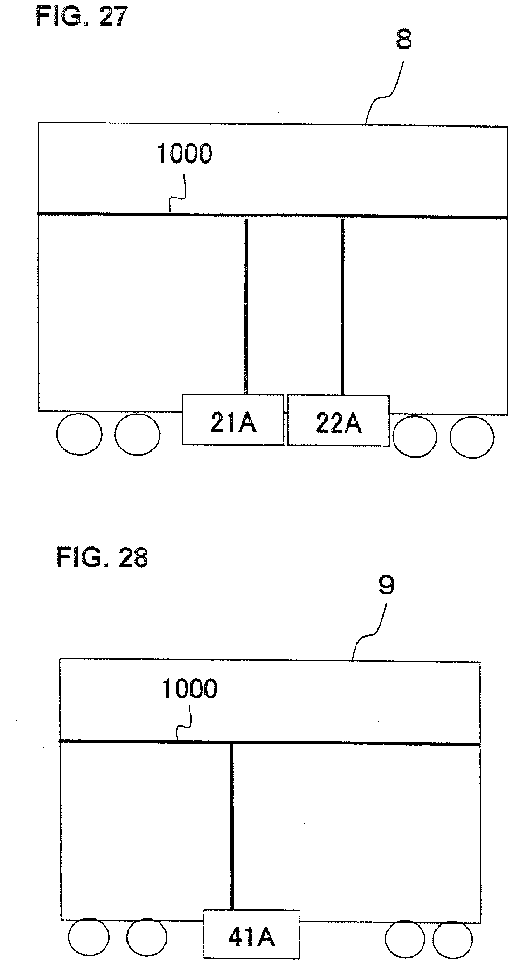

Figure 27 is a diagram showing a rail car (including a transformer and a power converter (single-phase AC or DC conversion) fitted or equipped under the floor) included in the train.

The transformer 21A and the power conversion device 22A are fitted or equipped under the floor of a car 8 and connected to the common bus line 1000.

Figure 28 s a diagram showing a rail car (including an auxiliary power supply device fitted or equipped under the floor) included in the train.

An auxiliary power supply device 41A is fitted or equipped under the floor of a car 9 and connected to the common bus line 1000.

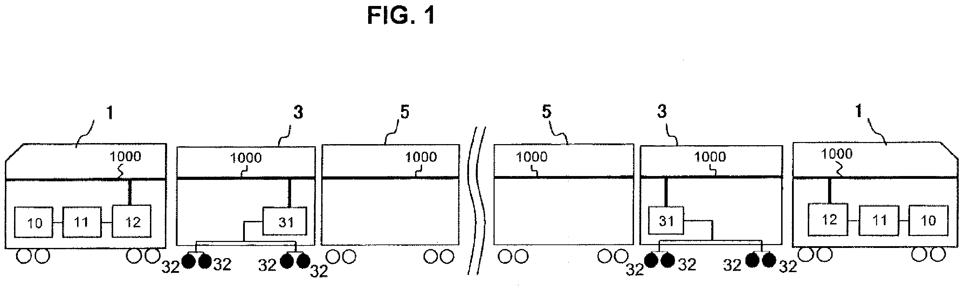

Figure 1 shows an example of a train with a combination of the cars 1, 3, and 5 included in the above-described cars. The illustrated train runs through unelectrified sections and electrified sections using generation means in the train as a power source.

In the train in Figure 1, the cars 1 located at the respective opposite ends of the train supply power to the cars 3 and 5 via the common bus line 1000. Apparatuses mounted on the cars 3 drive the motors 32 to allow the train to run. Furthermore, auxiliary power supply devices mounted on the cars 5 supply power to loads in the train. Thus, the required functions of the train are fulfilled.

Furthermore, any of (1) to (4) described below or any combination thereof (except a combination of (3) and (4)) is used to implement the scheme in which the different power sources mounted on the cars located at the respective opposite ends supply power to the common bus line 1000.
(1) The same control target voltage for the common bus line 1000 is set for the different power sources.
(2) The above-described train control system 2000 is used to determine and control the electric generating capacity of the power sources.
(3) The common bus line 1000 is duplicated so that the power sources mounted on the different cars 1 are connected to the respective portions of the common bus line 1000 and that the apparatuses on the cars 3 and 5, which serve as loads, are connected to one of the two portions of the common bus line. Each of the power sources and the loads includes selection means for allowing a connection to either of the two portions of the common bus line. Thus, even if one of the two portions of the common bus line is defective, power can be transmitted from the power source to the load.
(4) The common bus line 1000 is divided into two feeding sections. The different power sources are connected to the respective sections. The apparatuses on the cars 3 and 5, which serve as loads, are connected to one of the two sections of the common bus line.

In this case, a contactor is provided in each of the two feeding sections so that even if one of the power supplies fails, power can be supplied to the whole train.

The electric generating capacity of the cars 1 is controlled based on power consumed by the cars 3 and 5 in the train as required. Furthermore, for the stable transmission and reception, via the common bus line 1000, of power in the train, the power consumption of the cars 3 and 5 is limited so that the total power consumption of the train is equal to the maximum power that can be generated by the cars 1. That is, one or both of the driving force and the onboard load are limited so that the total maximum electric generating capacity of the generation means in the train is equal to the sum of the electric power for driving in the train and the power consumed by the loads on the train via the auxiliary power supply device.

Thus, the generated power and consumed power in the train can be balanced, enabling prevention of a possible overvoltage on the common bus line 1000 and possible rundown of apparatuses caused by a reduced voltage. Thus, the train can be stably and continuously operated.

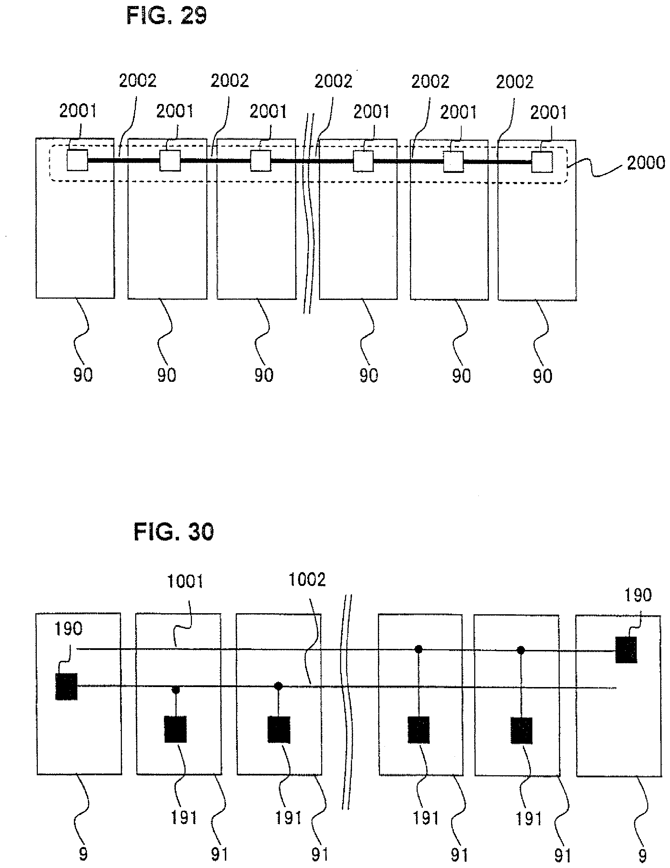

The above-described functions can be further stabilized by mounting of the train control system 2000 shown in Figure 29. The train control system 2000 includes terminals 2001 provided on the respective cars and each configured to monitor and control the operational status of the corresponding onboard apparatus, and transmission paths 2002 each connecting the terminals 2001 together. The train control system 2000 can more accurately monitor, control, and limit the generating power, the driving force, and the car load at a higher speed. This enables the train to be operated stably.

Figure 1 shows an example in which the cars 3 and 5 are arranged in the middle of the train in a coupled manner. However, similar effects are exerted by providing the train with, instead of the cars 3 and 5, the cars 304 with the functions of both the cars 3 and 5. Of course, the cars 304 may be provided along with the cars 3 and 5.

Furthermore, if the number of cars in the train is simply increased, the length of the train can be easily changed by additionally coupling the car 5 to the train.

Coupling the car 6 to the train allows energy generated during braking to be stored so that the stored energy can be utilized for acceleration. This enables an increase in efficiency, improvement of a fuel consumption rate, and a reduction in burdens on mechanical brakes. Thus, costs for train operation can be reduced.

Coupling the car 7 to the train enables the burdens on the mechanical brakes to be reduced by consuming the energy generated during braking. Thus, the costs for train operation (maintenance costs for the brakes) can be reduced.

In the above description, by way of example, the dedicated cars with the power storage means including 61 and 62 and the power consumption means including 71 and 72, that is, the cars 6 and 7, are coupled to the train. However, these means may be distributedly arranged on other cars in the train, for example, the cars 1, 3, 5, or 304.

In Figure 1, the cars 1 with the generation means are arranged at the opposite ends of the train in a coupled manner and are both operated. However, if the train is short in length, the operating time of the generation means can be shortened by operating only one of the cars 1 with the other stopped. This in turn enables a reduction in maintenance costs. The car 1 may be exclusively coupled to one end of the train in order to make the train operation more efficient.

Furthermore, in this case, only one car 1 serves as a power source. Thus, if this car 1 fails, providing passenger service is difficult. To avoid such a situation, the car 1A including the generation means with a small capacity may be included in the train in a coupled manner.

The car 1A includes the generation means mounted under the floor and can thus be loaded with passengers. Thus, the position where the car 1A is arranged in the train in a coupled manner is not limited, and the passenger capacity of the train can be increased. Of course, the train length and weight may be reduced without a decrease in passenger capacity by changing the car 1A to any other car. Hence, provision of the passenger service and running of the train can be achieved without an increase in train weight.

When the power supply on the car 1A is the only power supply in the train, if running of the train is given top priority, the power required to provide the passenger service may be permanently or temporarily limited to ensure the power required to allow the train to run.

The number of cars 1A that can be included in the train in a coupled manner is not limited. A plurality of cars 1A may be included in the train to ensure the required power. (The generation means may be operated using any of the methods described above in (1) to (4)). The above-described functions may be provided manually or by automatic switching carried out by the above-described train control system.

Furthermore, in the above description, the power source for the cars 1 and 1A is an internal combustion engine. However, generation means such as fuel batteries may be used as a power source as is the case with the cars 101 and 101A.

In general, a variation in the power required for the train is faster than that in the electric generating capacity of the fuel batteries. Thus, the instantaneous required power required for the train may be excessive or insufficient.

Coupling the car 6 with the power storage means to the train allows the power of the fuel batteries to be averaged, enabling more efficient operation. Of course, similar functions can be provided by distributedly arranging the functions of the car 6 in other cars in the train, for example, the cars 101, 3, and 5.

As described above, of course, when a change in train length, identification of types of cars included in the train in a coupled manner, and control of the onboard apparatuses are carried out automatically by the train control system 2000 shown in Figure 29 or manually or semi-manually by the driver, crew member, or maintenance technician, the apparatuses included in the train can be reliably and quickly set.

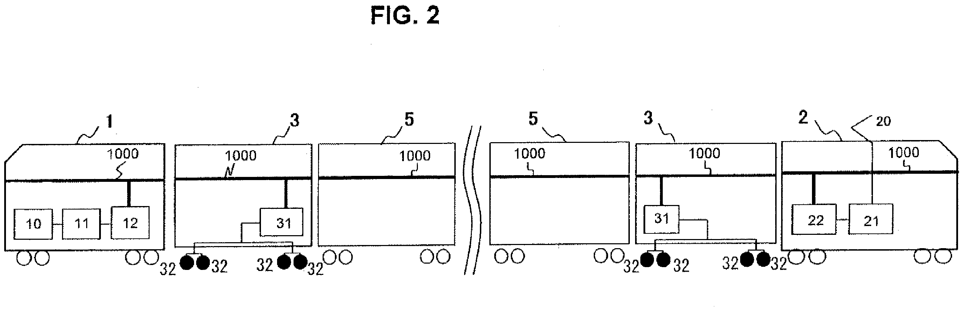

Figure 2 shows another example of a train in which the cars 1, 3, 5, and 2, included in the already described cars, are combined together. Figure 2 is different from Figure 1 in that the different power sources in the cars 1 and 2 supply power to the train. The train runs through the unelectrified sections and the electrified sections using the generation means in the train as a power source, like the train in Figure 1. In the electrified section, the illustrated train obtains power source through the catenary via the pantograph 20, transformer 21, and power converter 22 mounted on the car 2.

In the train in Figure 2, the cars 1 and 2 located at the respective opposite ends of the train supply power to the cars 3 and 5 via the common bus line 1000. The apparatuses mounted on the cars 3 drive the motors 32 to allow the train to run. Furthermore, the auxiliary power supply devices mounted on the cars 5 supply power to the loads in the train. Thus, the required functions of the train are provided.

Any of (1) to (4) described below or any combination thereof (except a combination of (3) and (4)) is used to implement the scheme in which the different types of power sources mounted on the cars located at the respective opposite ends of the train supply power to the common bus line 1000.
(1) The same control target voltage for the common bus line 1000 is set for the different types of power sources.
(2) The above-described train control system 2000 is used to determine and control the electric generating capacities of the power sources.
(3) The common bus line 1000 is duplicated so that the power sources mounted on the different cars 1 are connected to the respective portions of the common bus line 1000 and that the apparatuses on the cars 3 and 5, which serve as loads, are connected to one of the two portions of the common bus line.

Each of the power sources and the loads includes selection means for allowing a connection to either of the two portions of the common bus line. Thus, even if one of the two portions of the common bus line 1000 is defective, power can be transmitted from the power source to the load. (4) The common bus line 1000 is divided into two feeding sections. The different power sources are connected to the respective sections. The apparatuses on the cars 3 and 5, which serve as loads, are connected to one of the two sections of the common bus line.

In this case, a contactor is provided in each of the two feeding sections so that even if one of the power supplies fails, power can be supplied to the whole train.

The electric generating capacity of the cars 1 and the power conversion amount of the cars 2 are controlled based on the power consumed by the cars 3 and 5 in the train as required. Furthermore, for the stable transmission and reception, via the common bus line 1000, of power in the train, the power consumption of the cars 3 and 5 is limited so that the total power consumption of the train is equal to or smaller than the sum of the maximum power that can be generated by the cars 1 and the maximum power conversion amount of the cars 2.

That is, one or both of the driving force and the onboard load are limited so that the sum of the power sources in the train (the electric generating capacity of the cars 1 + the power conversion amount of the cars 2) is equal to the sum of the electric power for driving in the train and the power consumed by the loads on the train via the auxiliary power supply device.

In the above-description, it is assumed that both the cars 1 and 2 can be operated. However, in the unelectrified section, the power conversion amount of the cars 2 is zero, and the power is provided only by the electric generating capacity of the cars 1. Thus, one or both of the driving force and the onboard load are limited so that the sum of the electric power for driving in the train and the power consumed by the loads on the train via the auxiliary power supply device is equal to or smaller than the maximum electric generating capacity of the cars 1.

Furthermore, in the electrified section, only the cars 2 with a high power conversion efficiency may be operated, with the cars 1 stopped from generating power. In this case, the electric generating capacity of the cars 1 is zero. Thus, one or both of the driving force and the onboard load are limited so that the sum of the electric power for driving in the train and the power consumed by the loads on the train via the auxiliary power supply device is equal to or smaller than the power conversion amount of the cars 2.

As described above, the generated power and consumed power in the train can be balanced, enabling prevention of a possible overvoltage on the common bus line 1000 and possible rundown of apparatuses caused by a reduced voltage. Thus, the train can be stably and continuously operated.

The above-described functions can be further stabilized by mounting of the train control system 2000 shown in Figure 29. The train control system 2000 includes the terminals 2001 provided on the respective cars and each configured to monitor and control the operational status of the corresponding onboard apparatus, and the transmission paths 2002 each connecting the terminals 2001 together. The train control system 2000 can more accurately monitor, control, and limit the generating power, the driving force, and the car load at a higher speed. This enables the train to be operated stably.

In the configuration in Figure 2, even if a power system is defective in any electrified section, the train can be continuously operated by actuating the generation means in the cars 1 to supply power to the train.

To deal with a defect in the generation means in the car 1 in any unelectrified section, the car 1A may be additionally coupled to the train. This enables provision of the passenger service and running of the train as described above in the example illustrated in Figure 1. In this case, when power from the car 1A is utilized even in the electrified section, the train can be run with energy lower than that required when the generation means of the cars 1 are actuated.

Figure 2 shows an example in which the cars 3 and 5 are arranged in the middle of the train in a coupled manner. However, similar effects are exerted by providing the train with, instead of the cars 3 and 5, the cars 304 with the functions of both the cars 3 and 5. Of course, the cars 304 may be provided along with the cars 3 and 5.

Furthermore, if the number of cars in the train is simply increased, the length of the train can be easily changed by additionally coupling the car 5 to the train.

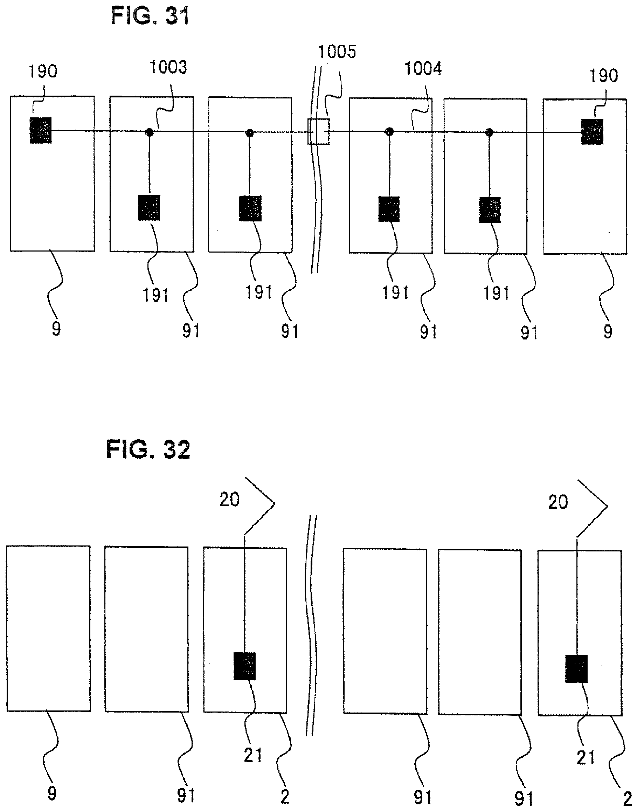

In Figure 2, the function to receive power through the catenary is mounted only in the cars 2. However, if further power is obtained in the electrified sections, the common bus line 1000 may be supplied with power from an increased number of cars 3 or 5 or any equivalent cars (for example, 304) and at least one additional car 2 configured to obtain power source through the catenary (and provided in addition to the car 2 located at the right end in Figure 2) as shown in Figure 32. This can increase the power capacity in the train, enabling increased train length and increased train speed to be easily dealt with.

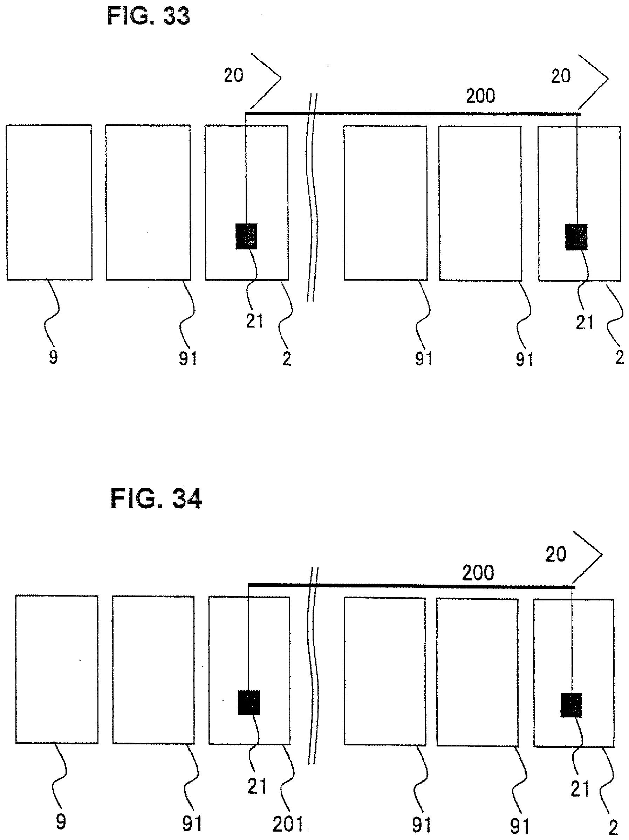

In the train configured as described above, when the pantographs 20 of the cars 2 in the train are connected together via the catenary 200 as shown in Figure 33, the two pantographs can be used in a complementary manner for the train. Even if one of the pantographs fails, this pantograph may be opened, and the other pantograph can be used to continue operation. This improves the reliability of the train.

Figure 34 shows an example in which the train is configured as follows. The car 201 with no pantograph 20 is additionally coupled to the train in the middle thereof. The catenary 200 is additionally provided on the roof so as to extend from the pantograph 20 mounted on the car 2 to the car 201. The catenary is connected to the transformer 21 mounted on the car 201 so that the common bus line 1000 is supplied with power via the power conversion device 22 mounted on the car 201.

However, Figure 34 illustrates the relationship between the pantograph 20 and the catenary 200 and the transformer 21 and the common bus line 1000 is not shown.

The configuration shown in Figure 34 enables an increase in the power capacity of the train similarly to a plurality of the cars 2 coupled together. The configuration enables increased train length and increased train speed to be easily dealt with.

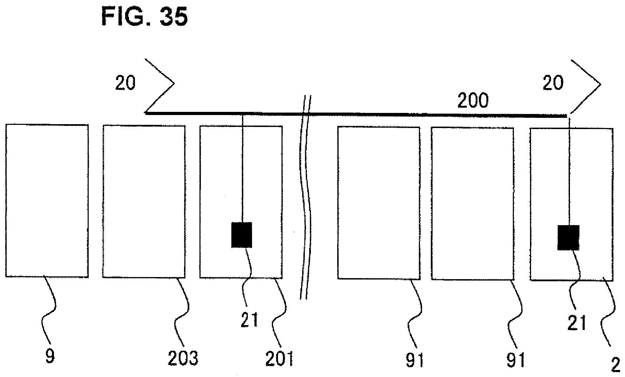

In another example in which similar effects are exerted, as shown in Figure 35, the car 203 with the pantograph 20 and the catenary 200 may be additionally coupled to the train. Furthermore, the transformer 21 mounted on the car 201 may be connected to the car 203 via the catenary 200. In this method, the power conversion devices 22 mounted on the cars 2 and 203 covert catenary voltage obtained through the catenary 200 and supply the resultant power to the common bus line 1000.

In this example, since the pantographs 20 are connected together, the two pantographs can be used in a complementary manner for the train. Even if one of the pantographs fails, this pantograph may be opened, and the other pantograph can be used to continue operation. This improves the reliability of the train.

The effects of the addition of the car 1A are exerted as described above in any of the above-described configurations (the configurations shown in Figure 2 and its derivatives).

Providing the passenger service is difficult in the case of a failure. To avoid such a situation, the car 1A including the generation means with a small capacity, that is, the auxiliary generation device, may be included in the train in a coupled manner. The car 1A includes the generation means mounted under the floor and can thus be loaded with passengers. Thus, the position where the car 1A is arranged in the train in a coupled manner is not limited, and the passenger capacity of the train can be increased. Of course, the auxiliary generation device may be additionally fitted or equipped on any of the cars already provided in the train.

Of course, the train length and weight may be reduced without a decrease in passenger capacity by changing the car 1A to any other car. Hence, provision of the passenger service and running of the train can be achieved without an increase in train weight. When the power supply on the car 1A is the only power supply in the train, if running of the train is given top priority, the power required to provide the passenger service may be permanently or temporarily limited to ensure the power required to allow the train to run.

The number of cars 1A that can be coupled to the train is not limited. A plurality of cars 1A may be coupled to the train to ensure the required power. (The generation means may be operated using any of the methods described above in (1) to (4)).

On the other hand, a regeneration brake configured to return the energy generated during braking to the catenary can be utilized in the electrified sections. However, if the catenary voltage falls outside a specified range or the infrastructure itself fails to accept regeneration power, when the train passes through a neutral section (a powerless section for switching a feeder section), the regeneration brake cannot be utilized. This may prevent efficient use of energy and a reduction in the need for maintenance.

In this condition, one or both of the cars 6 and 7 are coupled to the train. Coupling the car 6 to the train allows the energy generated during braking to be stored in the power storage means 61 so that the stored energy can be utilized for acceleration. This enables an increase in efficiency, improvement of the fuel consumption rate, and a reduction in burdens on mechanical brakes. Thus, the costs for train operation can be reduced.

On the other hand, coupling the car 7 to the train enables the burdens on the mechanical brakes to be reduced by consuming the energy generated during braking. Thus, the costs for train operation (maintenance costs for the brakes) can be reduced.

In the above description, by way of example, the dedicated cars with the power storage means including 61 and 62 and the power consumption means including 71 and 72, that is, the cars 6 and 7, are coupled to the train. However, these means may be distributedly arranged on other cars in the train, for example, the cars 1, 3, 5, or 304.

In the above description, the power source for the car 1 is an internal combustion engine. However, generation means such as fuel batteries may be used as a power source as is the case with the car 101A.

In general, a variation in the power required for the train is faster than that in the electric generating capacity of the fuel batteries. Thus, the instantaneous required power required for the train may be excessive or insufficient.

Coupling the car 6 with the power storage means to the train allows the power of the fuel batteries to be averaged, enabling more efficient operation. Of course, similar functions can be provided by distributedly arranging the functions of the car 6 in other cars in the train, for example, the cars 101, 3, and 5.

As described above, of course, when a change in train length, identification of types of cars included in the train in a coupled manner, and control of the onboard apparatuses are carried out automatically by the train control system 2000 shown in Figure 29 or manually or semi-manually by the driver, crew member, or maintenance technician, the apparatuses included in the train can be reliably and quickly set.

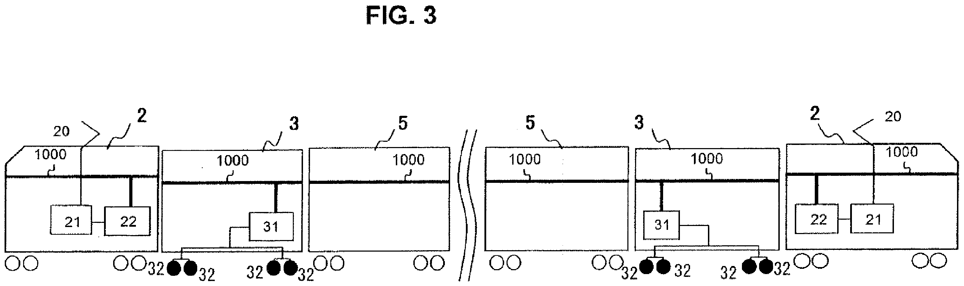

Figure 3 is a diagram showing a train dedicated to the electrified sections and including the cars 2 connected to the respective opposite ends thereof. The train is dedicated to the electrified sections and includes the same combination of intermediate cars as that in the examples shown in Figures 1 and 2 and the cars 2 connected to the respective opposite ends thereof.

In this configuration, power source for the train is obtained from the catenary via the pantographs 20, transformers 21, and power converters 22 mounted on the two cars 2 connected to the respective opposite ends of the train. The power is then supplied to the cars 3 and 5 via the common bus line 1000. The apparatuses mounted on the cars 3 drive the motors 32 to allow the train to run. Furthermore, the auxiliary power supply devices mounted on the cars 5 supply power to the loads in the train. Thus, the required functions of the train are provided.

Any of (1) to (4) described below or any combination thereof (except a combination of (3) and (4)) is used to implement the scheme in which the two power sources mounted on the cars located at the respective opposite ends supply power to the common bus line 1000.
(1) The same control target voltage for the common bus line 1000 is set for the two power sources.
(2) The above-described train control system 2000 is used to determine and control the electric generating capacities of the power sources.
(3) The common bus line 1000 is duplicated so that the power sources mounted on the different cars 1 are connected to the respective portions of the common bus line 1000 and that the apparatuses on the cars 3 and 5, which serve as loads, are connected to one of the two portions of the common bus line. Each of the power sources and the loads includes selection means for allowing a connection to either of the two portions of the common bus line. Thus, even if one of the two portions of the common bus line 1000 is defective, power can be transmitted from the power source to the load.
(4) The common bus line 1000 is divided into two feeding sections. The different power sources are connected to the respective sections. The apparatuses on the cars 3 and 5, which serve as loads, are connected to one of the two sections of the common bus line.

In this case, a contactor is provided in each of the two feeding sections so that even if one of the power supplies fails, power can be supplied to the whole train.

The power conversion amount of the two cars 2 is controlled based on the power consumed by the cars 3 and 5 in the train as required. Furthermore, for the stable transmission and reception, via the common bus line 1000, of power in the train, the power consumption of the cars 3 and 5 is limited so that the total power consumption of the train is equal to or smaller than the sum of the maximum power that can be generated by the cars 1 and the maximum power conversion amount of the cars 2.

That is, one or both of the driving force and the onboard load are limited so that the sum of the power sources in the train (in the example illustrated in Figure 3, the power conversion amount of the two cars 2) is equal to the sum of the electric power for driving in the train and the power consumed by the loads on the train via the auxiliary power supply device.

In the above-description, it is assumed that the power conversion functions of the two cars 2 are available. However, if only one of the two cars 2 can be or is operated, one or both of the driving force and the onboard load are limited so that the sum of the electric power for driving in the train and the power consumed by the loads on the train via the auxiliary power supply device is equal to or smaller than the maximum electric generating capacity of the car 2.

As described above, the generated power and consumed power in the train can be balanced, enabling prevention of a possible overvoltage on the common bus line 1000 and possible rundown of apparatuses caused by a reduced voltage. Thus, the train can be stably and continuously operated.

The above-described functions can be further stabilized by mounting of the train control system 2000 shown in Figure 29. The train control system 2000 includes the terminals 2001 provided on the respective cars and each configured to monitor and control the operational status of the corresponding onboard apparatus, and the transmission paths 2002 each connecting the terminals 2001 together. The train control system 2000 can more accurately monitor, control, and limit the generating power, the driving force, and the car load at a higher speed. This enables the train to operate more stably.

In the configuration shown in Figure 3, if the power conversion device mounted in the train fails as a result of a defect in a power system on the ground while the train is in an electrified section, then the train loses the power source and fails to provide the passenger service and to run.

Thus, as means for dealing with such a situation, the car 1A is added to the train so as to supply power to the train via the common bus line 1000. This enables provision of the passenger service and running of the train to be achieved as described above in the examples illustrated in Figures 1 and 2.

Of course, the power from the car 1A may be utilized not only if the power source is lost as described above but also when the power supply is insufficient or as an additional power source during a recovery operation resulting from a delay. (This is not described in Figures 1 and 2).

Furthermore, the number of cars 1A coupled to the train is not limited. Two or three cars 1A may be coupled to the train as required. In this case, the power generated by the cars 1A is distributed among the onboard apparatuses in the train via the common bus line 1000.

Additionally, the power from the cars 1A may be supplied to specified cars. (Power distribution sections are set so that the power is supplied only to the loads in specified sections).

Figure 3 shows an example in which the cars 3 and 5 are arranged in the middle of the train in a coupled manner. However, similar effects are exerted by providing the train with, instead of the cars 3 and 5, the cars 304 with the functions of both the cars 3 and 5. Of course, the cars 304 may be provided along with the cars 3 and 5.

Furthermore, if the number of cars in the train is simply increased, the length of the train can be easily changed by additionally coupling the car 5 to the train.

In Figure 3, an increased number of cars 3 or 5 or any equivalent cars (for example, 304) allows a long train to be configured while ensuring a more sufficient driving force and an onboard power supply required for train operation.

In Figure 3, when the pantographs 20 mounted on the two cars 2 coupled to the train at the respective opposite ends thereof are connected together via the catenary 200, the two pantographs can be used in a complementary manner for the train. Even if one of the pantographs fails, this pantograph may be opened, and the other pantograph can be used to continue operation. This improves the reliability of the train.

In Figure 3, the cars 2 with the function to receive power through the catenary are coupled to the train at the respective opposite ends thereof. However, one or both of the cars 2 may be arranged in the middle of the train in a coupled manner (this configuration is the same as that shown in Figure 32.). Of course, the same effects as those described above are exerted by connecting the pantographs 20 together via the catenary 200. Figure 33 shows the case where one of the cars 2 is arranged in the middle of the train in a coupled manner.

Figure 34 shows an example in which the train is configured as follows. Instead of the car 2, the car 201 with no pantograph is additionally coupled to the train in the middle thereof. The catenary 200 is additionally provided on the roof so as to extend from the pantograph 20 mounted on the car 2 to the car 201. The catenary is connected to the transformer 21 mounted on the car 201 so that the common bus line 1000 is supplied with power via the power conversion device 22 mounted on the car 201.

However, Figure 34 illustrates the relationship between the pantograph 20 and the catenary 200 and the transformer 21 and the common bus line 1000 is not shown.

This configuration exerts the same effects as those of the configuration shown in Figure 3 but is also advantageous for enabling a reduction in the required length of the catenary 200, which is expensive to lay. Of course, the required length of the catenary 200 can be further reduced by placing the car 201 close to the car 21.

However, in this case, no power consuming car is present between the cars 201 and 2, or if any power consuming car is present, the power consumed by this car is low compared to the total power consumed. Thus, the common bus line 1000 may need to bear extremely high power. Thus, the car 201 is ideally arranged as close to the center of the train as possible in terms of the required length of the catenary 200 and elimination of concentration of power on the common bus line 1000.

In another example in which similar effects are exerted, as shown in Figure 35, the car 203 with the pantograph 20 and the catenary 200 may be additionally coupled to the train. Furthermore, the transformer 21 mounted on the car 201 may be connected to the car 203 via the catenary 200. In this method, the power conversion devices 22 mounted on the cars 2 and 203 covert catenary voltage obtained through the catenary 200 and supply the resultant power to the common bus line 1000.

In this example, since the pantographs 20 are connected together, the two pantographs can be used in a complementary manner for the train. Even if one of the pantographs fails, this pantograph may be opened, and the other pantograph can be used to continue operation. This improves the reliability of the train.

Furthermore, when the car 203 with the pantograph is arranged so as to set as long a distance as possible between the car 203 and the car 2 with the pantograph and the power conversion function, the pantographs are arranged further from each other. Thus, even in a section where the wire forming the catenary has a low "tension", the train can run at high speed without causing mechanical resonation of the wire. The coupled position of the car 203 which results in the longest distance is the end of the train located opposite the car 2 (the position of the car 9 at the left end of Figure 35) .

The effects of the addition of the car 1A are exerted in any of the above-described configurations (the configurations shown in Figure 3 and its derivatives) as described above.

On the other hand, the regeneration brake configured to return the energy generated during braking to the catenary can be utilized in the electrified sections. However, if the catenary voltage falls outside a specified range or the infrastructure itself fails to accept regeneration power, when the train passes through a neutral section (a powerless section for switching a feeder section), the regeneration brake cannot be utilized. This prevents efficient use of energy and a reduction in the need for maintenance.

In this condition, one or both of the cars 6 and 7 are coupled to the train. Coupling the car 6 to the train allows the energy generated during braking to be stored in the power storage means 61 so that the stored energy can be utilized for acceleration. This enables an increase in efficiency, improvement of the fuel consumption rate, and a reduction in burdens on mechanical brakes. Thus, the costs for train operation can be reduced.

On the other hand, coupling the car 7 to the train enables the burdens on the mechanical brakes to be reduced by consuming the energy generated during braking. Thus, the costs for train operation (maintenance costs for the brakes) can be reduced.

In the above description, by way of example, the dedicated cars with the power storage means including 61 and 62 and the power consumption means including 71 and 72, that is, the cars 6 and 7, are coupled to the train. However, these means may be distributedly arranged on other cars in the train, for example, the cars 1, 3, 5, or 304.

In the above description, the power source for the car 1 is an internal combustion engine. However, generation means such as fuel batteries may be used as a power source as is the case with the car 101A.

In general, a variation in the power required for the train is faster than that in the electric generating capacity of the fuel batteries. Thus, the instantaneous required power required for the train may be excessive or insufficient.

Coupling the car 6 with the power storage means to the train allows the power of the fuel batteries to be averaged, enabling more efficient operation. Of course, similar functions can be provided by distributedly arranging the functions of the car 6 in other cars in the train, for example, the cars 101, 3, and 5.

As described above, of course, when a change in train length, identification of types of cars coupled to the train, and control of the onboard apparatuses are carried out automatically by the train control system 2000 shown in Figure 29 or manually or semi-manually by the driver, crew member, or maintenance technician, the components included in the train can be reliably and quickly set.

Aspects common to the configurations shown in Figures 1 to 3 will be described below. In the train control system 2000, a part of the terminal 2001 functions to generally manage all the terminals.

Replacing the leading car with the car 1 or 2 enables the running section to be changed. Furthermore, the train length can be freely changed by adding or removing intermediate cars to or from the train.

Depending on the car added to the train, an emergency power supply can be provided (cars 1A and 101A), regeneration power can be effectively utilized with the burdens on the mechanical brakes reduced (car 6), or the burdens on the mechanical brakes can be reduced (car 7).

The above description is based on the AC catenary. However, a train running under a DC catenary can be provided by coupling the car 202 with an apparatus feeding power to the common bus line 1000 though the DC catenary (or a third rail) and the pantograph 20 (in the case of the third rail, a shoe gear) via the power converter 23, to the train instead of the cars 2, 201 and 203.

As described above, the driving device, the power supply device, and the auxiliary power supply device are mounted on the different cars to distribute the corresponding functions across the train. This allows distribution of the weight. Furthermore, the car including the driving device is combined with the power supply car used depending on operation. This allows optimization of a train running only through the unelectrified sections, a train running only through the electrified sections, and a train operating both through the electrified sections and through the unelectrified sections.

In particular, when the car with the auxiliary generation device is coupled to a train using the catenary voltage as the only power source, the passenger service can be continuously provided even during catenary power interruption. As a result, the train operation can be more efficiently performed.

Moreover, mounting of the train control system performing the above-described control and status display allows the power supply switching function to be automated and optimized. This enables a reduction in the burdens on the driver and crew.

Additionally, when provided with a function to automatically recognize the configuration (or a function to allow the configuration to be centrally set), the train control system enables the *setting of the cars to be easily carried out* when the configuration is changed and allows the configuration to be easily recognized when a coupling or uncoupling of the train is carried out. Thus, the need for a different train or a coupling or uncoupling during operation can be dealt with in a short time. Of course, the driver, any crew member, or a maintenance technician can set the configuration manually.

When the train control system is provided with a function to communicate with the ground so that the configuration can be set and checked from the ground, settings for the train can be further simplified. Thus, the operation costs are expected to be reduced.

The present invention can provide a train which allows possible damage to tracks to be minimized and which can deal with an emergency, the train having an appropriate degree of freedom of operation and wherein cars can be effectively used.

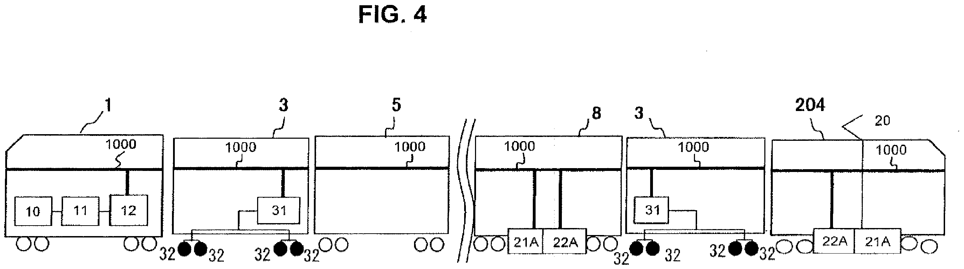

Figure 4 is a diagram showing a
train of rail cars.
In Figure 4, the train of rail cars includes the car 1 equipped with a generation device (for example, an internal combustion engine), the car 204 equipped with the pantograph 20 and configured to obtain power from the catenary to supply the power to another car, the car 204 including a transformer and a power converter (single-phase AC or DC conversion) fitted or equipped under the floor, the car 3 equipped with the driving device 31, the car 5 including the common bus line 1000 through which power is transmitted between adjacent cars, the car 8 with the transformer 21A and the power converter (single-phase AC or DC conversion) 22A fitted or equipped under the floor, and the like.

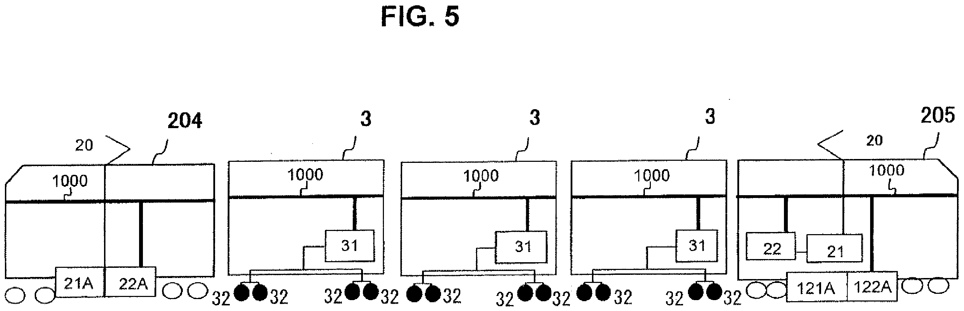

Figure 5 is a diagram showing a
train of rail cars.
In Figure 5, the train of rail cars includes the car 204 equipped with a pantograph and configured to obtain power from the catenary to supply the power to another car, the car 204 including a transformer and a power converter (single-phase AC or DC conversion) fitted or equipped under the floor, the car 205 equipped with a pantograph and configured to obtain power from the catenary to supply the power to another car, the car 205 including the auxiliary generation device 121A fitted or equipped under the floor, and the car 3 equipped with a plurality of the driving devices 31.

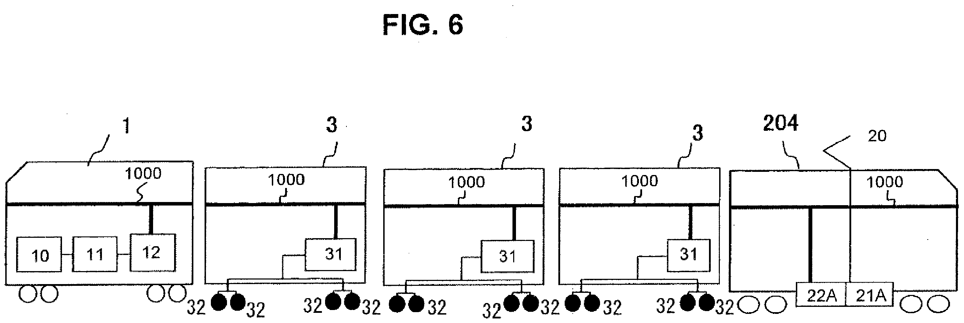

Figure 6 is a diagram showing a
train of rail cars.
In Figure 6, the train of rail cars includes the car 1 equipped with a generation device (for example, an internal combustion engine), the car 204 equipped with a pantograph and configured to obtain power from the catenary to supply the power to another car, the car 204 including the transformer 21A and the power converter (single-phase AC or DC conversion) 22A fitted or equipped under the floor, and the car 3 equipped with a plurality of the driving devices 31.

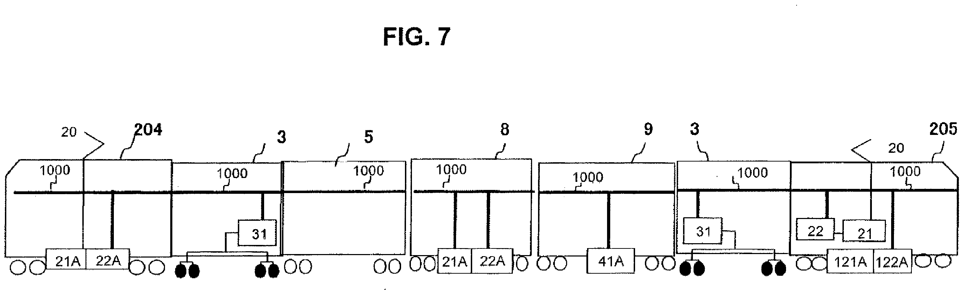

Figure 7 is a diagram showing a
train of rail cars.
In Figure 7, the train of rail cars includes the car 204 equipped with a pantograph and configured to obtain power from the catenary to supply the power to another car, the car 204 including the transformer 21A and the power converter (single-phase AC or DC conversion) 22A fitted or equipped under the floor, the car 205 equipped with the pantograph 20 and configured to obtain power from the catenary to supply the power to another car, the car 205 including the auxiliary generation device 121A fitted or equipped under the floor, the car 3 equipped with the driving device 31, the car 5 including the common bus line 1000 through which power is transmitted between adjacent cars, the car 8 with the transformer 21A and the power converter (single-phase AC or DC conversion) 22A fitted or equipped under the floor, and the car 9 with the auxiliary power supply device 41A fitted or equipped under the floor.

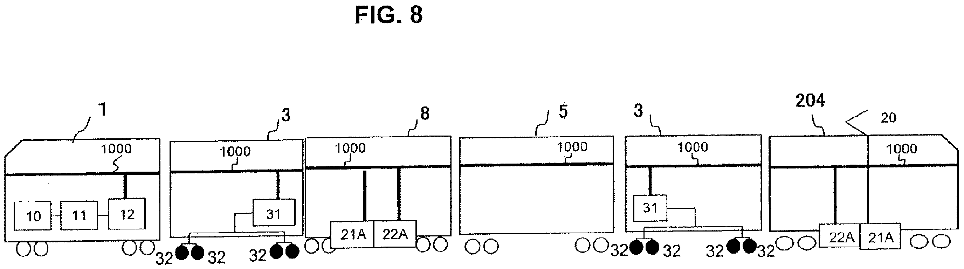

Figure 8 is a diagram showing a
train of rail cars.
In Figure 8, the train of rail cars includes the car 1 equipped with a generation device (for example, an internal combustion engine), the car 204 equipped with the pantograph 20 and configured to obtain power from the catenary to supply the power to another car, the car 204 including the transformer 21A and the power converter (single-phase AC or DC conversion) 22A fitted or equipped under the floor, the car 3 equipped with the driving device 31, the car 5 including the common bus line 1000 through which power is transmitted between adjacent cars, and the car 8 with the transformer 21A and the power converter (single-phase AC or DC conversion) 22A fitted or equipped under the floor.

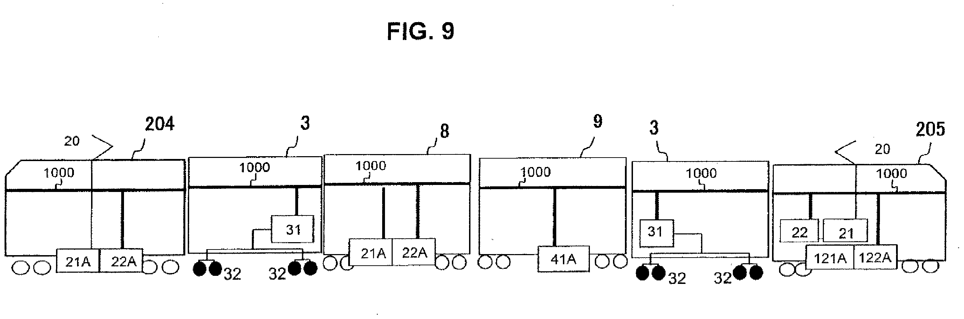

Figure 9 is a diagram showing a
train of rail cars.
In Figure 9, the train of rail cars includes the car 204 equipped with the pantograph 20 and configured to obtain power from the catenary to supply the power to another car, the car 204 including the transformer 21A and the power converter (single-phase AC or DC conversion) 22A fitted or equipped under the floor, the car 205 equipped with the pantograph 20 and configured to obtain power from the catenary to supply the power to another car, the car 205 including the auxiliary generation device 121A fitted or equipped under the floor, the car 3 equipped with the driving device 31, the car 8 with the transformer 21A and the power converter (single-phase AC or DC conversion) 22A fitted or equipped under the floor, and the car 9 with the auxiliary power supply device 41A fitted or equipped under the floor.

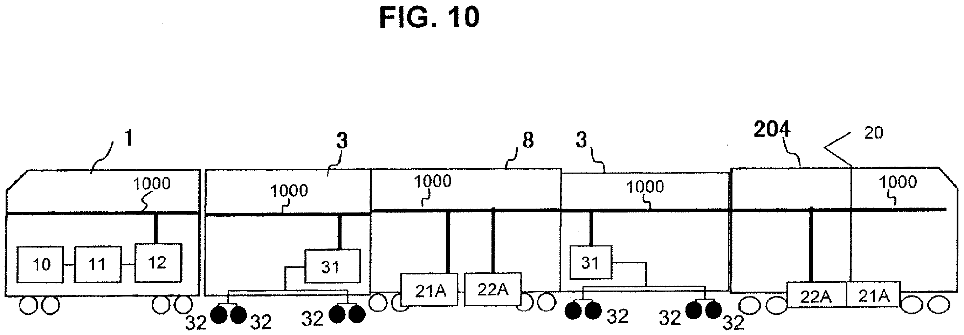

Figure 10 is a diagram showing a
train of rail cars.
In Figure 10, the train of rail cars includes the car 1 equipped with a generation device (for example, an internal combustion engine), the car 204 equipped with the pantograph 20 and configured to obtain power from the catenary to supply the power to another car, the car 204 including the transformer 21A and the power converter (single-phase AC or DC conversion) 22A fitted or equipped under the floor, the car 3 equipped with the driving device 31, and the car 8 with the transformer 21A and the power converter (single-phase AC or DC conversion) 22A fitted or equipped under the floor.

The diagrams of the trains of the rail cars shown in Figures 1 to 10 are only illustrative. When the rail cars with the various onboard electric components for rail cars mounted thereon as described above are combined together and coupled to a train so that the driving device, the power supply device, the auxiliary power supply device, the auxiliary generation device, and the like are mounted on the different cars to distribute the corresponding functions across the train, thus allowing the weights to be distributed, and the car with the driving device is combined with the power supply car used depending on operation, a train running only through the electrified sections, a train running only through the unelectrified sections, and a train running both through the electrified sections and through the unelectrified sections can be optimized.

In particular, when the car with the auxiliary generation device is coupled to a train using the catenary voltage as the only power source, the passenger service can be continuously provided even during catenary power interruption.

Furthermore, the use of a function to enable coupling and uncoupling of the train into a plurality of configurations regardless of the types of the cars in the train enables the train length to be appropriately changed before and after the beginning of operation and during the operation. Thus, the range of the operation is expected to be further expanded.

Moreover, mounting of the train control system performing the above-described control and status display allows the power supply switching function to be automated and optimized. This enables a reduction in burdens on the driver and crew.

Additionally, when provided with a function to automatically recognize the configuration (or a function to allow the configuration to be centrally set), the train control system enables the setting of the cars to be easily carried out when the configuration is changed and allows the configuration to be easily recognized when a coupling or uncoupling of the train is carried out. Thus, the need for a different train or a coupling or uncoupling during operation can be dealt with in a short time. Of course, the driver, any crew member, or a maintenance technician can set the configuration manually.

In addition, when the train control system is provided with a function to communicate with the ground so that the configuration can be set and checked from the ground, settings for the train can be further simplified.

## Claims

1. A train including a plurality of rail cars (1, 2, 3, 1A) coupled together into a train, each of the plurality of rail cars comprising a DC power bus for DC power supply, and the DC power buses being connected together and laid through the train, wherein:
each DC power bus comprises a common bus line (1000), and is connected to the DC power bus of another rail car in the train;
a first one of the rail cars (1) is equipped with a first power supply device configured to generate power to supply DC power to the DC power bus, the DC power bus and the first power supply device being connected together;
a second one of the rail cars (2) is equipped with a second power supply device configured to receive power from a catenary to supply DC power to the DC power bus, the DC power bus and the second power supply device being connected together;
a third one of the rail cars (3) is equipped with power conversion means (31) for converting DC power fed from the DC power bus into voltage/frequency variable AC power and an AC motor (32) driven by the AC power to generate a tractive force for the cars, the DC power bus and the power conversion means (31) being connected together;
a fourth one of the rail cars (1A) is equipped with an auxiliary generation device to supply power to passenger service apparatuses, the auxiliary generation device including an internal combustion engine 10A, an auxiliary generator 11A, and a power converter 12A; and **characterized in that**:
the train is equipped with a train control system (2000) comprising terminal devices (2001) mounted on the respective rail cars and each configured for monitoring and controlling the operational status of the corresponding onboard apparatus, and transmission paths (2002) each connecting the terminal devices together, the train control system (2000) determining and controlling the electric generating capacity.

2. The train according to claim 1, wherein the first power supply device includes an internal combustion engine (10), a generator (11) configured to convert the driving force of the internal combustion engine (10) into electricity, and a power converter (12) configured to convert an output voltage from the generator (11) into a DC voltage and to supply power to the common bus line (1000).

3. The train according to claim 1 or 2, wherein the second power supply device includes a pantograph (20) to receive power from the catenary and to supply power to the common bus line (1000), a transformer (21) for reducing voltage, and a power conversion means (22) for converting the reduced power into stable DC voltage power.

4. The train according to any one of the previous claims, wherein a fifth one of the rail cars is equipped with the common bus line (100) and the passenger service apparatuses.

## Patentansprüche

1. Zug, umfassend eine Vielzahl von Eisenbahnwaggons (1, 2, 3, 1A), die zu einem Zug aneinander gekoppelt sind, wobei jeder der Vielzahl von Bahnwaggons einen Gleichspannungs-Leistungsbus zur Gleichspannungs-Leistungsversorgung umfasst und die Gleichspannungs-Leistungsbusse miteinander verbunden und durch den Zug hindurch verlegt sind, wobei:
jeder Gleichspannungs-Leistungsbus eine gemeinsame Busleitung (1000) umfasst und mit dem Gleichspannungs-Leistungsbus eines weiteren Bahnwaggons im Zug verbunden ist;
ein erster der Bahnwaggons (1) mit einer ersten Leistungsversorgungsvorrichtung ausgestattet ist, die konfiguriert ist, um Leistung zu erzeugen, um den Gleichspannungs-Leistungsbus mit Gleichspannungs-Leistung zu versorgen, wobei der Gleichspannungs-Leistungsbus und die erste Leistungsversorgungsvorrichtung miteinander verbunden sind; wobei
ein zweiter der Bahnwaggons (2) mit einer zweiten Leistungsversorgungsvorrichtung ausgestattet ist, die konfiguriert ist, um Leistung von einer Fahrleitung zu empfangen, um den Gleichspannungs-Leistungsbus mit Gleichspannungs-Leistung zu versorgen, wobei der Gleichspannungs-Leistungsbus und die zweite Leistungsversorgungsvorrichtung miteinander verbunden sind;
ein dritter der Bahnwaggons (3) mit einem Leistungsumwandlungsmittel (31) zum Umwandeln von Gleichspannungs-Leistung, die vom Gleichspannungs-Leistungsbus zugeführt wird, in Spannungs-/Frequenz-variable Wechselspannungs-Spannung und einem Wechselspannungs-Motor (32) ausgestattet ist, der durch die Wechselspannungs-Leistung angetrieben wird, um eine Traktionskraft für die Waggons zu erzeugen, wobei der Gleichspannungs-Leistungsbus und das Leistungsumwandlungsmittel (31) miteinander verbunden sind;
ein vierter der Bahnwaggons (1A) mit einer Zusatzerzeugungsvorrichtung ausgestattet ist, um Leistung für Fahrgastdienstvorrichtungen zuzuführen, wobei die Zusatzerzeugungsvorrichtung einen Verbrennungsmotor (10A), einen Zusatzgenerator (11A) und einen Leistungswandler (12A) umfasst; und
**dadurch gekennzeichnet, dass**
der Zug mit einem Zugsteuersystem (2000) ausgestattet ist, welches Endgerätvorrichtungen (2001), die auf den entsprechenden Bahnwaggons angebracht und jeweils konfiguriert sind, um den Betriebsstatus des entsprechenden Geräts an Bord zu überwachen und zu steuern, und Übertragungspfade (2002) umfasst, die jeweils die Endgerätvorrichtungen miteinander verbinden, wobei das Zugsteuersystem (2000) die Fähigkeit zur Energieerzeugung bestimmt und steuert.

2. Zug nach Anspruch 1, wobei die erste Leistungsversorgungsvorrichtung einen Verbrennungsmotor (10), einen Generator (11), der konfiguriert ist, um die Antriebskraft des Verbrennungsmotors in Elektrizität umzuwandeln, und einen Leistungswandler (12) umfasst, der konfiguriert ist, um eine Ausgangsspannung aus dem Generator (11) in eine Gleichspannung umzuwandeln und die gemeinsame Busleitung (1000) mit Leistung zu versorgen.

3. Zug nach Anspruch 1 oder 2, wobei die zweite Leistungsversorgungsvorrichtung einen Pantograf (20), um Leistung von der Fahrleitung zu empfangen und die gemeinsame Busleitung (1000) mit Leistung zu versorgen, einen Transformator (21) zur Spannungsverringerung und ein Leistungsumwandlungsmittel (22) zum Umwandeln der verringerten Leistung in stabile Gleichspannungsleistung umfasst.

4. Zug nach einem der vorhergehenden Ansprüche, wobei ein fünfter der Bahnwaggons mit der gemeinsamen Busleitung (100) und den Fahrgastdienstvorrichtungen ausgestattet ist.

## Revendications

1. Train comprenant une pluralité de wagons (1, 2, 3, 1A) couplés ensemble en un train, chacun de la pluralité de wagons comprenant un bus de puissance en courant continu (DC) pour une alimentation de puissance DC, et les bus de puissance DC étant connectés ensemble et déposés à travers le train, dans lequel :
chaque bus de puissance DC comprend une ligne de bus commune (1000), et est connecté au bus de puissance DC d'un autre wagon du train ;
un premier des wagons (1) est équipé d'un premier dispositif d'alimentation de puissance configuré pour générer une puissance afin d'alimenter en puissance DC le bus DC, le bus de puissance DC et le premier dispositif d'alimentation de puissance étant connectés ensemble ;
un deuxième des wagons (2) est équipé d'un second dispositif d'alimentation de puissance configuré pour recevoir de la puissance d'une caténaire afin d'alimenter en puissance DC le bus de puissance DC, le bus de puissance DC et le second dispositif d'alimentation de puissance étant connectés ensemble ;
un troisième des wagons (3) est équipé de moyens de conversion de puissance (31) pour convertir la puissance DC alimentée par le bus de puissance DC en une puissance en courant alternatif (AC) à tension/fréquence variable et un moteur AC (32) entraîné par la puissance AC afin de générer une force de traction pour les wagons, le bus d'alimentation de puissance DC et les moyens de conversion de puissance (31) étant connectés ensemble ;
un quatrième des wagons (1A) est équipé d'un dispositif de génération auxiliaire pour alimenter en puissance des appareils de services aux voyageurs, le dispositif de génération auxiliaire comprenant un moteur à combustion interne 10A, un générateur auxiliaire 11A, et un convertisseur de puissance 12A ; et **caractérisé en ce que** :
le train est équipé d'un système de commande de train (2000) comprenant des dispositifs terminaux (2001) montés sur les wagons respectifs et chacun configuré pour surveiller et commander l'état de fonctionnement de l'appareil embarqué correspondant, et des trajets de transmission (2002) connectant chacun les dispositifs terminaux ensemble, le système de commande de train (2000) déterminant et commandant la capacité de génération électrique.

2. Train selon la revendication 1, dans lequel le premier dispositif d'alimentation de puissance comprend un moteur à combustion interne (10), un générateur (11) configuré pour convertir la force motrice du moteur à combustion interne (10) en électricité, et un convertisseur de puissance (12) configuré pour convertir une tension de sortie du générateur (11) en une tension DC et pour alimenter en puissance la ligne de bus commune (1000).

3. Train selon la revendication 1 ou 2, dans lequel le second dispositif d'alimentation de puissance comprend un pantographe (20) pour recevoir de la puissance de la caténaire et pour alimenter en puissance la ligne de bus commune (1000), un transformateur (21) pour réduire la tension, et des moyens de conversion de puissance (22) pour convertir la puissance réduite en une puissance à tension DC stable.

4. Train selon l'une quelconque des revendications précédentes, dans lequel un cinquième des wagons est équipé de la ligne de bus commune (100) et des appareils de services aux voyageurs.
